# EUROPÄISCHE PATENTSCHRIFT

(11) **EP 1 193 662 B1**
(45) Veröffentlichungstag und Bekanntmachung des Hinweises auf die Patenterteilung: **29.09.2004**
(21) Anmeldenummer: 01118171.6
(22) Anmeldetag: 26.07.2001
(51) Int. Cl.: G08G 1/042, G08G 1/015

(54) **Verfahren und Anordnung zur Erfassung von Verkehrsdaten mittels Detektion und Klassifikation sich bewegender oder stehender Fahrzeuge**
Method and apparatus for detecting traffic data by means of detection and classification of moving or non-moving vehicles
Procédé et dispositif pour détecter des données de traffic au moyen de la détection et de la classification des véhicules en mouvement ou en stationnement

(30) Priorität: 29.09.2000 DE 10048362
(43) Veröffentlichungstag der Anmeldung: 03.04.2002
(73) Patentinhaber: Zachmann, Reinhard, 84092 Bayerbach (DE); Fraunhofer-Gesellschaft zur Förderung der angewandten Forschung e.V., 80636 München (DE)
(72) Erfinder: Zachmann, Reinhard, 84092 Bayerbach (DE)
(74) Vertreter: Kruspig, Volkmar, Dipl.-Ing.

(56) Entgegenhaltungen:
- EP-A- 0 604 809
- EP-A- 0 770 978
- US-A- 5 408 179
- US-A- 5 491 475
- US-A- 5 748 108
- US-A- 5 880 682

## Beschreibung

Die Erfindung betrifft ein Verfahren und eine Anordnung zur Erfassung von Verkehrsdaten mittels Detektion und Klassifikation sich bewegender oder stehender Fahrzeuge aller Art unter Verwendung von mindestens einachsig sensitiven Magnetfeldsensoren gemäß Oberbegriff des Patentanspruchs 1 bzw. 5.

Die Erfassung von Verkehrsdaten auf der Basis der Ermittlung der Anzahl von Fahrzeugen auf Verkehrswegen ist eine wesentliche Voraussetzung für das Betreiben intelligenter Verkehrsleit- und Überwachungssysteme.

Bei bisher bekannten Vorrichtungen wird beispielsweise von im Fahrbahnboden verlegten Induktionsschleifen ausgegangen, die beim Überfahren durch fahrende Fahrzeuge ein Sensorsignal bereitstellen.

Bei derartigen Induktionsschleifen ist die Verlegung im Fahrbahnboden außerordentlich kostenintensiv. Bei einer Erneuerung der Fahrbahn infolge von Fahrbahnschäden besteht im Regelfall die Notwendigkeit, auch die Induktionsschleifen neu zu verlegen.

Ebenfalls kommen Radar-bzw. Lasersensoren zum Einsatz, die an Fahrbahnüberführungen, z.B. Brücken montiert sind. Derartige Sensoren sind jedoch gegenüber veränderten Witterungsbedingungen wie Schnee, Regen, Nebel, aber auch bei kritischen Temperaturverhältnissen störanfällig. Insbesondere Infrarotsensoren sind bei sommerlichen Temperaturen und nicht ausreichenden Temperaturdifferenzen zwischen Fahrzeug und Umgebung nur unzureichend in der Lage, signifikante Meßergebnisse zu liefern.

Ein Verfahren bzw. eine Anordnung nach den Oberbegriffen der Ansprüche 1 und 5 ist beipielweise aus der US 5 748 108 bekannt.

Aus dem Vorgenannten ist es daher Aufgabe der Erfindung, ein weiterentwickeltes Verfahren sowie eine zugehörige Anordnung zur Erfassung von Verkehrsdaten mittels Detektion und Klassifikation sich bewegender oder stehender Fahrzeuge aller Art anzugeben, wobei hierfür auf an sich bekannte Magnetfeldsensoren zurückzugreifen ist.

Die Datenerfassung soll unabhängig von Witterungsbedingungen wie Schnee, Regen, Helligkeit, Nebel, Temperatur oder Verschmutzungen möglich sein, wobei ergänzend auch die Fahrzeuggeschwindigkeit bestimmbar ist. Darüber hinaus soll die Möglichkeit geschaffen werden, auf mehrspurigen Fahrbahnen die einzelnen Fahrzeuge separat zu erfassen und eine Klassifikation beispielsweise zwischen PKW und LKW vorzunehmen.

Die Lösung der Aufgabe der Erfindung erfolgt mit einem verfahren nach den Merkmalen des Patentanspruchs 1 sowie mit einer Anordnung gemäß der Lehre nach Patentanspruch 5, wobei die Unteransprüche jeweils mindestens zweckmäßige Ausgestaltungen und Weiterbildungen umfassen.

Auf der Basis des vorgestellten Verfahrens erfolgt die Detektion des natürlichen Magnetfelds der Erde und dessen Veränderung durch Fahrzeuge. Die Sensoren können in einfacher Weise unterhalb der Fahrbahn, aber auch oberhalb oder seitlich an entsprechenden nicht ferromagnetischen Trägern befestigt werden.

Bevorzugt greift das magnetische Erfassungssystem auf hochempfindliche, miniaturisierte Ein- und/oder Mehrachsen Fluxgate-Sensoren zurück, deren Ausgangssignal proportional zur jeweiligen Magnetfeldkomponente ist. Nach einer Signalfilterung, einer hochauflösenden Analog/Digital-Wandlung und einem automatischen Offset-Abgleich ist eine weitere Signalverarbeitung mit Hilfe eines Kommunikationsrechners bzw. Weiterleitung an ein übergeordnetes System möglich.

Verfahrensgemäß wird mittels der Fluxgate- Magnetfeldsensoren zunächst eine Erfassung der unbeeinflußten Erdmagnetfeld-Komponenten vorgenommen. Anschließend erfolgt eine Kalibrierung des Systems. Weiterhin werden die vertikalen bzw. in der Normalen zur Erdoberfläche sich ergebenden flußfokussierenden Veränderungen des Erdmagnetfelds zyklisch bestimmt, und es erfolgt eine Glättung der Meßwerte durch schnelle Fouriertransformation (FFT). Hiernach erfolgt eine Zuordnung von zeitlich nacheinander vorliegenden Meßwerten in Fahrtrichtung beabstandet hintereinander liegender Magnetfeldsensoren, um die Richtung und die Geschwindigkeit der jeweiligen Fahrzeugbewegung sowie die Fahrzeuglänge zur Klassifikation des jeweiligen Fahrzeugs zu bestimmen. Zur Geschwindigkeitsermittlung wird eine Vielzahl von am besten übereinstimmenden Meßwert-Extrempaarungen über einen vorgegebenen Zeitraum berücksichtigt.

Die Geschwindigkeit des Fahrzeugs wird aus der Zeitdifferenz zwischen den Spitzenwerden der Meßwert der hintereinander angeordneten Magnetfeldsensoren berechnet.

Zur Erfassung und Klassifikation von mehrspurig nebeneinander fahrenden Fahrzeugen für n Spuren sind n+1 Sensoren vorgesehen, wobei deren Signale einer Kreuzkorrelation unterzogen werden, um sogenannte magnetische Schatten durch größere Fahrzeuge, z.B. LKWs, in dem sich kleinere Fahrzeuge, z.B. PKWs befinden, zu eliminieren.

Grundsätzrich werden die Sensorsignale einer passiven Tiefpaßfilterung zur Eliminierung hochfrequenter Störsignale und einer anschließenden Analog/Digital-Wandlung unterworfen. Die digitalen Daten gelangen dann auf einen digitalen Signalprozessor (DSP), welcher gleichzeitig für alle Sensoren die Datenakquisition und Datenwandlung startet.

Die vorverarbeiteten, ereignisrelevanten Ausgangsdaten des digitalen Signalprozessors gelangen dann über eine serielle Schnittstelle auf einen Kommunikationsrechner, der wiederum mit einem z.B. Mobilfunknetz in Verbindung steht oder der Daten an eine Verkehrsleitzentrale weiterreicht.

Durch die Kalibrierung bzw. Offset-Korrektur am Meßort unter Berücksichtigung der anliegenden Sensorsignale, die ohne Beeinflussung eines Fahrzeugs entstehen, ist eine hohe Gesamtselektivität des Systems erreichbar.

Es hat sich in überraschender Weise gezeigt, daß die vertikale Magnetfeldkomponente bzw. die in die Normale der Erdoberfläche gerichtete Komponente für die Auswertung am effektivsten ist. Weiterhin wird vorgeschlagen, für eine bessere Unterscheidung der Fahrzeuge in den Klassen PKW und LKW nicht nur auf die festgestellte Signalhöhe, d.h. die Amplitude, und die Signalform abzustellen, sondern zusätzlich die Fahrzeuglänge zu berücksichtigen. Da die Geschwindigkeitsinformation erfindungsgemäß vorliegt, kann ohne weiteres die Auswertung der Signaldauer, d.h. der Peakweite zur besseren Klassifikation Verwendung finden.

Anordnungsseitig wird für jede zu überwachende Fahrspur, Fahrbahn oder -fläche mindestens eine Sensorbaugruppe aus zwei in Fahrtrichtung hintereinander befindlichen Fluxgate-Magnetfeldsensoren vorgesehen, wobei die mindestens eine Sensorbaugruppe neben, über oder unter der Fahrspur oder Fahrbahn fixiert ist.

Die Fluxgate-Magnetfeldsensoren sind über einen Tiefpaß mit einem Analog/Digital-Wandler verbunden, dessen verkettete Ausgangssignale auf den bereits erwähnten digitalen Signalprozessor zur Ereignisdetektion und protokollgerechten Abspeicherung geführt werden.

Die Sensorbaugruppe bzw. die Sensorbaugruppen sind an einem nicht ferromagnetischen Ausleger, z.B. oberhalb oder seitlich der Fahrbahn oder Fahrspur befestigt. Ebenso besteht die Möglichkeit, die Sensorbaugruppe oder Baugruppen in zwei parallel angeordneten, unterhalb der Fahrbahn verlaufenden nicht ferromagnetischen Leerrohren anzuordnen. Im letzteren Fall besteht die Möglichkeit, eine nicht exakt parallele Lage durch eine Software-Kalibrierung zu kompensieren.

Das vorgestellte Verfahren sowie die Anordnung zur Erfassung von Verkehrsdaten mittels Detektion und Klassifikation sich bewegender oder stehender Fahrzeuge ermöglicht eine sichere Ermittlung von signifikaten Daten sowohl bei Durchfahrt von Fahrzeugen durch eine Überkopf-Anordnung als auch beim Einbringen der Sensoren in den Fahrbahnuntergrund oder bei dem Fixieren an der Fahrbahnseite. Es ist eine Erfassung und Zählung von Fahrzeugen sowie die Ermittlung von Geschwindigkeit, Fahrzeugart und Abstand der Fahrzeuge zueinander sowie die Fahrtrichtung für ein- und mehrspurige Fahrbahnen möglich.

Ebenso kann das erfindungsgemäße Verfahren und die zugehörige Anordnung auf Flughäfen im sogenannten Rollverkehrs-Management Verwendung finden. Hier besteht die Möglichkeit einer zuverlässigen Detektion von Flugzeugen und anderen Fahrzeugen und der exakten Klassifikation und Unterscheidung unterschiedlicher Objekte, z.B. Flugzeugtypen, einzelnen auf dem Vorfeld befindlichen Fahrzeugen und so weiter. Weiterhin kann bei diesem Anwendungsfall eine Bestimmung der Geschwindigkeit und des Abstands von Objekten sowie die Ermittlung des Halteabstands von der Landebahn-Haltelinie vorgenommen werden.

Selbstverständlich kann die Erfindung auch zur Belegungserkennung auf oder an Parkflächen oder Ampelanlagen oder zur Überwachung von Ein- und Ausfahrten genutzt werden. Dadurch, daß grundsätzlich eine Vor-Ort-Kalibrierung und Offset-Korrektur durch das System selbst vorgenommen wird, sind lokale Magnetfeldstörungen, z.B. durch Bewehrungsstähle in der Fahrbahn oder dergleichen ferromagnetischer Objekte nicht störend.

Der digitale Signalprozessor kann neben den Steuerungs- und Speicherfunktionen zusätzlich Aufgaben einer aktiven Signalfilterung übernehmen, ohne daß in die Hardware des Systems eingegriffen werden muß.

Die Erfindung soll nachstehend anhand eines Ausführungsbeispiels sowie unter Zuhilfenahme von Figuren näher erläutert werden.

Hierbei zeigen:
- Fig. 1: eine Ausführungsform der Anordnung der Sensorbaugruppen oder Sensormodule oberhalb der Fahrbahn;
- Fig. 2: eine Ausführungsform der Verkehrsdaten-Erfassung bei Überfahrt;
- Fig. 3: ein Blockschaltbild der Anordnung zur Erfassung von Verkehrdaten;
- Fig. 4: durch das Erdmagnetfeld am Meßort hervorgerufene Sensorsignale sowie die signifikanten Sensorkoordinaten; und

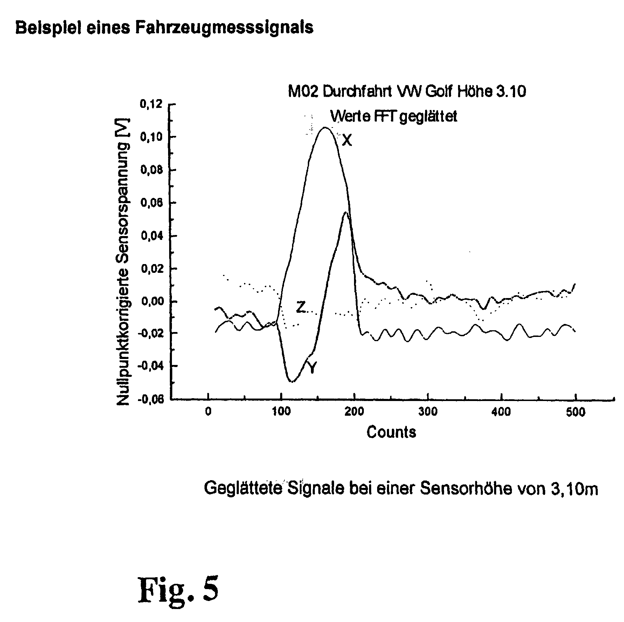

- Fig. 5: ein Beispiel eines Fahrzeug-Meßsignals nach FFT.

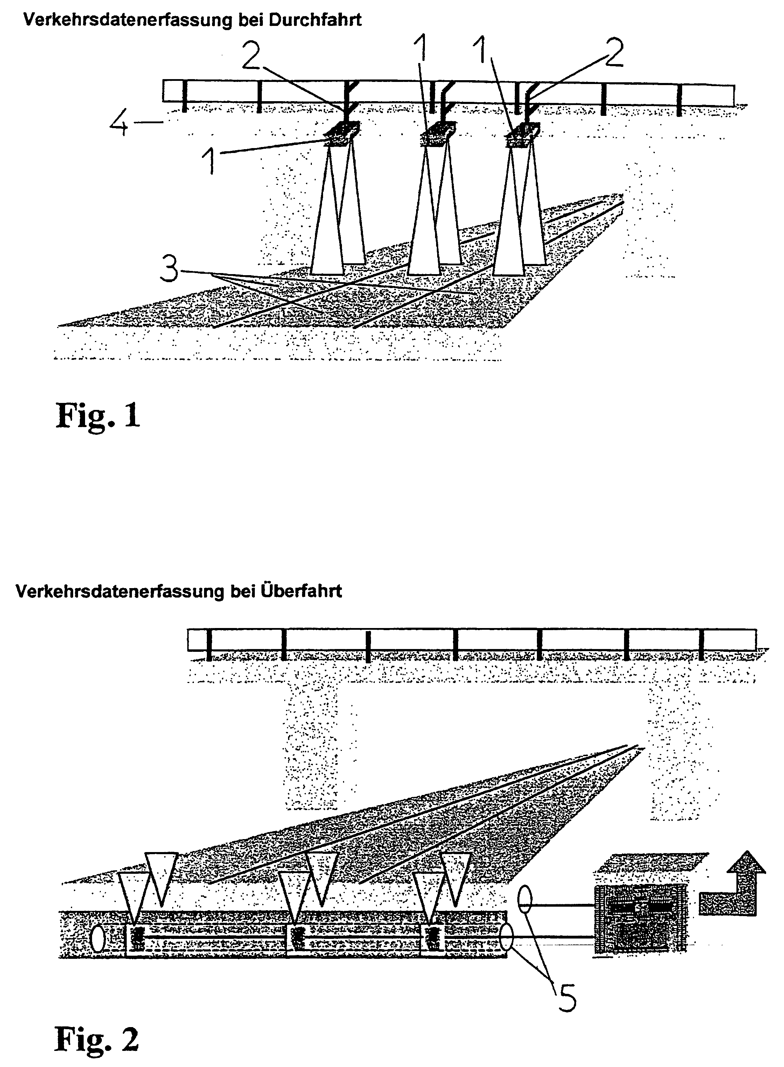

Wie aus der Fig. 1 ersichtlich, werden die Sensorbaugruppen oder Sensormodule 1 mit Hilfe eines nicht ferromagnetischen Meßgestänges 2 über den jeweiligen Fahrspuren 3, z.B. unter Nutzung eines Brückenbauwerks 4 fixiert.

Jeweils zwei im Sensormodul 1 befindliche Fluxgate-Magnetfeldsensoren sind in einem definierten Abstand zueinander und zu ihrer magnetischen Achse justiert.

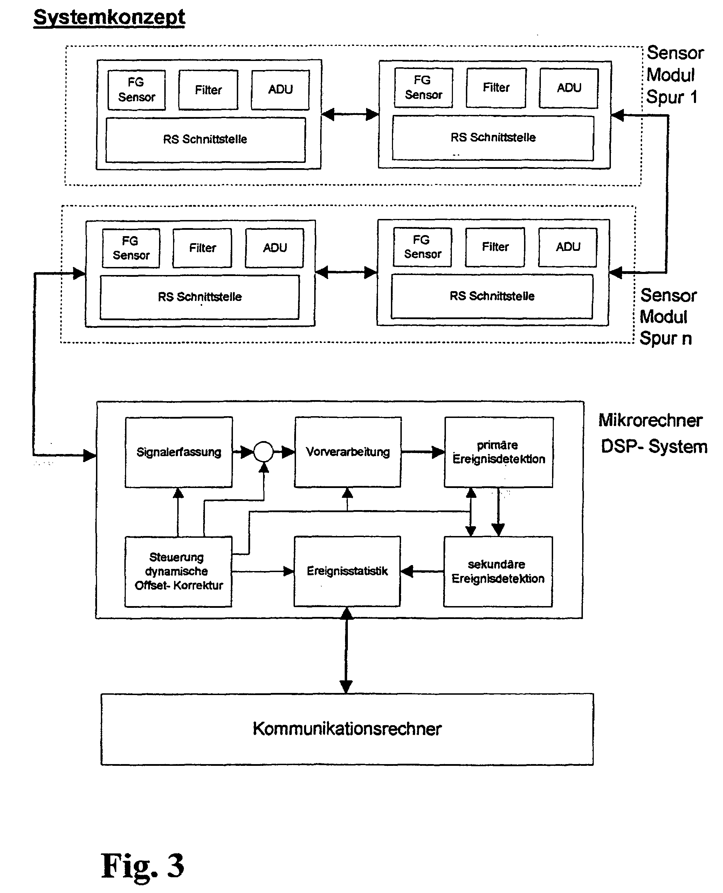

Die einzelnen Sensorsignale werden gemäß Fig. 3 nach entsprechender Filterung und A/D-Wandlung über eine serielle Schnittstelle einem Mikrorechner bzw. dem DSP zugeführt.

Nach einer synchronen, interruptgesteuerten Signalerfassung erfolgt eine dynamische Offset-Korrektur.

Auf der Grundlage dieser ermittelten Werte erfolgt dann die Peakerkennung und Signalvorverarbeitung mit Schattenunterdrückung.

In einer primären Ereignisdetektion werden die gewonnenen Fahrzeugdaten auf Plausibilität überprüft, ausgewertet, gezählt und später in einem festgelegten Protokoll in einem Ereignisregister abgelegt.
Über eine entsprechende Schnittstelle erfolgt dann der weitere Datenaustausch und die übergeordnete Steuerung des Sensorsystems.

Bei der Verkehrsdatenerfassung aus dem Fahrbahnuntergrund gemäß Fig. 2 werden die einzelnen Sensoren in einem nicht ferromagnetischen Leerrohr 5 plaziert, wobei sich jeweils zwei Leerrohre 5 beabstandet im Erdreich unterhalb der Fahrbahn befinden.

Der Abstand zwischen den Leerrohren liegt bevorzugt im Bereich von im wesentlichen 0,5 bis 1 m.

Die Plazierung und Fixierung der Sensoren erfolgt über einen geeigneten Zutritt vom Fahrbahnrand aus.

Mögliche Differenzen aufgrund nicht exakter Parallelität können durch eine Software-Kalibrierung ausgeglichen werden.

Das komplette System wird weiterhin einem dynamischen Offset-Abgleich unterzogen, so daß eine selbsttätige Einstellung und Berücksichtung der magnetischen Verhältnisse am Meßort gegeben ist. Insbesondere können hier mögliche vorhandene Komponenten ferromagnetischer Art in der Fahrbahn oder in Nachbarschaft dieser berücksichtigt bzw. deren Auswirkungen beseitigt werden.

Das Systemkonzept ist in Fig. 3 gezeigt.

Die vorhandene Hardware besteht aus Sensormodulen und einem Verarbeitungsmodul in Form eines Mikrorechners bzw. eines digitalen Signalprozessors. Letzterer überträgt die Daten dann an einen Kommunikationsrechner. Pro Richtungsfahrbahn wird von einem Verarbeitungsmodul ausgegangen. Das Sensormodul enthält neben den eigentlichen Magnetfeldsensoren einen passiven Tiefpaßfilter mit einer Grenzfrequenz von im wesentlichen 150 Hz. Hiermit werden hochfrequente Störsignale aus dem Sensorsignal eliminiert.

Weitergehende Filterungen können digital im Verarbeitungsmodul mit Hilfe des Mikroprozessors bzw. des digitalen Signalprozessors vorgenommen werden. Hierdurch wird eine größere Flexibilität bei der Unterdrückung von Störsignalen erreicht, da eine Modifizierung der Hardware entfallen kann. Für die Analog/Digital-Umsetzung kann beispielsweise auf einen 16-Bit-Umsetzer zurückgegriffen werden. Hier ergeben sich besondere Vorteile im Sinne einer Vermeidung parasitärer Effekte wie Quantisierungsfehler und so weiter.

In einem Ausführungsbeispiel ist vorgesehen, den Analog/Digital-Umsetzer in einem speziellen Modus zu betreiben, der den Verkabelungsaufwand reduziert. Hierbei werden die an einen seriellen Dateneingang anliegenden Daten in das interne Schieberegister mit dem Ergebnis der Wandlung geladen. verbindet man dann Data-in und Data-out von zwei Wandlern miteinander und nimmt eine Kettenschaltung der Wandler vor, so ist nur eine einzige Datenleitung im System erforderlich.

Für die digitalen Signalprozessoren kann auf bekannte Systeme der Mobilfunktechnik zurückgegriffen werden. Derartige Prozessoren sind leistungsoptimiert und benötigen nur eine geringe Energie. Das Verarbeitungsmodul bzw. der DSP startet gleichzeitig für alle Sensoren die Akquirierung und Wandlung der Daten. Mit Hilfe der verketteten Datenleitungen der Analog/Digital-Wandler werden die Ergebnisse der A/D-Wandlungen zu einem seriellen Datenstrom zusammengefügt, der den DSP über den vorhandenen Dateneingang erreicht.

Um die Magnetfeldsensoren auszulesen, aktiviert das Verarbeitungsmodul das Chip-Select-Signal und legt einen Impuls auf das Konvertierungssignal der Wandler. Daraufhin werden sämtliche A/D-Wandler angesprochen und geben das Wandlungsergebnis aus. Da gleichzeitig über den Data-in-Eingang das Digitalwort des in der Kette vorher befindlichen Umsetzers in das interne Register geschrieben wird, ergibt sich ein gewünschter, fortlaufender serieller Datenstrom.

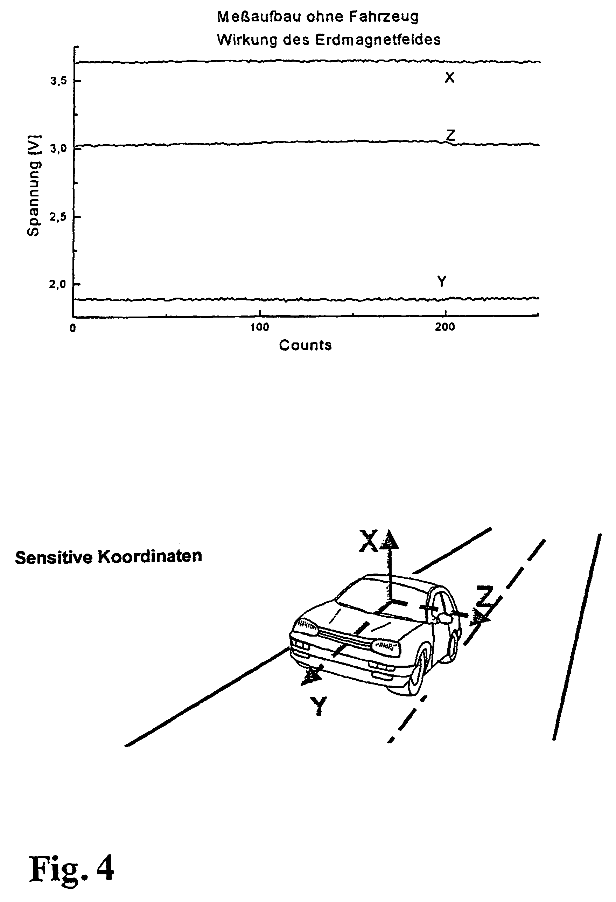

Aus durchgeführten Versuchen mit einem auf etwa 3,10 m Höhe angebrachten Sensormodul hat sich gezeigt, daß die X-Komponente (siehe Fig. 4) einen deutlichen positiven Spitzenwert aufweist, während die Y-Komponente (in Fahrtrichtung) zuerst negativ, dann positiv wird. Die Gesamthöhe des Y-Spitzenwert war dabei stets kleiner oder gleich der halben Höhe des X-Spitzenwert Die Z-Komponente (senkrecht zur Fahrtrichtung) wird dagegen kaum beeinflußt. Dieses Verhalten wurde als typisch für alle Durchfahrtsmessungen bestätigt.
Aus dieser Erkenntnis wird bevorzugt der X-Spitzenwert betrachtet. Der Y-Spitzenwert kann allerdings unter Verwendung eines Zweiachsen-Sensors kosteneffizient gemessen und ebenfalls zur Datenerfassung genutzt werden.

Bei Messungen zur Vorbeifahrt wurden die Sensormodule in Höhen von 0,65 m und 1,20 m angeordnet. Zur Analyse der Einwirkung des Erdmagnetfelds wurden als Fahrtrichtungen Süd-Nord und Ost-West untersucht. Auch bei diesem Ausführungsbeispiel ergab es sich, daß das X-Signal außerordentlich aussagekräftig ist, während die Y- bzw. z-Komponenten um den Faktor 8 bzw. 3,5 kleinere Werte aufwiesen. Bei einem Abstand von etwa 3 m war nur noch die X-Komponente des Signals eindeutig dem Fahrzeug zuzuordnen.

Meßergebnisse zur Überfahrt ließen neben dem direkten Signal, welches durch den überfahrenden PKW ausgelöst wurde, auch ein Signal erkennen, das durch einen parallel fahrenden weiteren PKW verursacht wurde. Dieser weitere PKW fuhr auf der Nebenspur und hatte in Z-Richtung einen Abstand zwischen Fahrzeugseite und dem Sensorkopf von ca. 2,1 m. Auch in diesem Fall ist das X-Signal wieder sehr aussagekräftig. Aufgrund desselben Vorzeichens des X-Peaks wie im Fall der Durchfahrt kann geschlußfolgert werden, daß die magnetische Wirkung des Fahrzeugs in X-Richtung auf der Flußfokussierung des Erdmagnetfelds beruht, da eine Remanenzwirkung ein unterschiedliches Vorzeichen bei Durch- und Überfahrt verursachen würde.

Die Ermittlung der Fahrzeuggeschwindigkeit erfolgt bei einem realisierten Ausführungsbeispiel über die Zeitdifferenz zwischen den Peaks des ersten und zweiten Sensors einer Fahrspur. Beim Beispiel eines PKW in der linken Spur beträgt der Zeitunterschied etwa 13 ms für eine Strecke von 0,5 m entsprechend einer Geschwindigkeit von 38,5 m/s bzw. 138 km/h. Ein 500 mm-Abstand der Sensoren kann auf einem geeigneten Träger ohne weiteres realisiert werden.

Bei weiteren Untersuchungen hat sich herausgestellt, daß auch die Erkennung von Fahrzeugen mit einem geringeren Anteil von ferromagnetischen Materialien möglich ist. Heute am Markt erhältliche Fahrzeuge mit Aluminiumkarosserie enthalten trotzdem hohe Gewichtsanteile aus Stahl in den Baugruppen Motor, Getriebe, Fahrwerk, Antrieb und Bremsen. Am Beispiel des Audi A8 mit Aluminiumkarosserie ergeben sich beispielsweise ca. 280 kg Stahlanteil für die Benzinermodelle und ca. 530 kg für die Diesel-Ausführung. Im Versuch zeigte ein Audi A8 TDI-Fahrzeug den gleichen Signalpeak wie ein vergleichbarer VW Golf mit Ottomotor.

Signalverläufe von LKW oder Sattelzugauflegern führen zu einem magnetischen Schatten, in dem ein PKW ohne weitere Maßnahmen nicht erkennbar ist. Um PKWs zu erkennen, die neben einem Aufleger bzw. Anhänger fahren, wird eine Kreuzkorrelation der Signale aus den verschiedenen Spuren vorgenommen. Ergänzend besteht die Möglichkeit der Verwendung von n+1 Sensoren für n Fahrspuren mit entsprechender Signalkorrelation.

Insgesamt ist das System gemäß Ausführungsbeispiel in der Lage, sowohl eine Anwesenheitsdetektion, d.h. die Erkennung eines stehenden KFZ pro Spur, als auch eine Klassifikation der Fahrzeuge vorzunehmen. Ebenso kann eine Ermittlung der Durchschnittsgeschwindigkeit der Fahrzeuge je nach Klasse, d.h. PKW oder LKW, vorgenommen und der Belegungsgrad der einzelnen Fahrspuren angegeben werden.

### Bezugszeichehliste

- 1: Sensormodul
- 2: Meßgestänge
- 3: Fahrspur
- 4: Brückenbauwerk
- 5: Leerrohr

## Patentansprüche

1. Verfahren zur Erfassung von Verkehrsdaten mittels Detektion und Klassifikation sich bewegender oder stehender Fahrzeuge aller Art unter Verwendung von mindestens einachsig sensitiven Magnetfeldsensoren,
**dadurch gekennzeichnet, daß**
mittels einer Anordnung (1) von mindestens zwei Fluxgate-Magnetfeldsensoren auf einer Fahrbahn (3) beabstandet voneinander zunächst eine Erfassung der unbeeinflußten Erdmagnetfeld-Komponenten am Einsatzort vorgenommen wird und anschließend eine Kalibrierung erfolgt;
weiterhin die Vertikale bzw. die Normale der Erdoberfläche und die in diese Richtung flußfokussierende Veränderung des Erdmagnetfelds zyklisch bestimmt und die erhaltenen Meßwerte durch schnelle Fouriertransformation geglättet werden, sowie eine Zuordnung von zeitlich nacheinander vorliegenden Meßwerten von in Fahrtrichtung beabstandet hintereinander liegenden Magnetfeldsensoren vorgenommen wird, um die Richtung und Geschwindigkeit der jeweiligen Fahrzeugbewegung sowie die Fahrzeuglänge zur Klassifikation des jeweiligen Fahrzeugs zu bestimmen, wobei zur Geschwindigkeitsermittlung eine Vielzahl am besten übereinstimmenden Meßwert-Extremapaarungen über einen vorgegebenen Zeitraum berücksichtigt werden.

2. Verfahren nach Anspruch 1,
**dadurch gekennzeichnet, daß**
die Geschwindigkeit der Fahrzeuge aus der Zeitdifferenz zwischen den Spitzenwerten der Meßwerte der hintereinander angeordneten Magnetfeldsensoren berechnet wird.

3. Verfahren nach Anspruch 1,
**dadurch gekennzeichnet, daß**
zur Erfassung und Klassifikation von mehrspurig nebeneinander fahrenden Fahrzeugen für n Spuren n+1 Sensoren vorgesehen sind und deren Signale einer Kreuzkorrelation unterzogen werden.

4. Verfahren nach einem der vorangegangenen Ansprüche,
**dadurch gekennzeichnet, daß**
die Sensorsignale einer passiven Tiefpaßfilterung zur Eliminierung hochfrequenter Störsignale und einer anschließenden Analog/Digital-Wandlung unterworfen werden, wobei die digitalen Daten auf einen digitalen Signalprozessor gelangen, welcher gleichzeitig für alle Sensoren die Datenakquisition und Datenwandlung startet und weiterhin die vorverarbeiteten, ereignisrelevanten Ausgangsdaten des digitalen Signalprozessors über eine serielle Schnittstelle auf einen Kommunikationsrechner gelangen.

5. Anordnung zur Durchführung des Verfahrens nach einem der Ansprüche 1 bis 4,
**dadurch gekennzeichnet, daß**
je zu überwachender Fahrspur oder Fahrbahn oder -fläche mindestens eine Sensorbaugruppe (1) aus zwei in Fahrtrichtung hintereinander befindlichen Fluxgate-Magnetfeldsensoren vorgesehen ist, wobei die mindestens eine Sensorbaugruppe neben, über oder unter der Fahrspur (3) oder Fahrbahn oder -fläche fixiert ist, weiterhin die Fluxgate-Magnetfeldsensoren über einen Tiefpaß mit einem Analog/Digital-Wandler verbunden sind, deren verkettete Ausgangssignale auf einen digitalen Signalprozessor zur Ereignisdetektion und Abspeicherung gelangen.

6. Anordnung nach Anspruch 5,
**dadurch gekennzeichnet, daß**
die Sensorbaugruppe an einem nicht ferromagnetischen Ausleger oberhalb oder seitlich der Fahrbahn oder Fahrspur befestigt ist.

7. Anordnung nach Anspruch 5,
**dadurch gekennzeichnet, daß**
die Sensorbaugruppe in zwei parallel angeordneten, unterhalb der Fahrbahn verlaufenden nicht ferromagnetischen Leerrohren (7) angeordnet ist.

8. Anordnung nach einem der Ansprüche 5 bis 7,
**dadurch gekennzeichnet, daß**
der digitale Signalprozessor über eine Schnittstelle mit einem Kommunikationsrechner zur weiteren Verarbeitung sowie zur drahtgebundenen oder drahtlosen Datenübertragung in Verbindung steht.

## Claims

1. A method for the acquisition of traffic data by means of the detection and classification of moving or stationary vehicles of any kind, using at least single-axis magnetic field sensors
**characterised in that**
at first an acquisition of the non-influenced earth magnetic field components is carried out at the installation site by means (1) of an arrangement of at least two fluxgate magnetic field sensors spaced from one another on a roadway (3), followed by a calibration;
further, the vertical or the normal, respectively, of the earth surface and the flux-focussing change in this direction of the earth magnetic field are cyclically determined and the obtained measuring values are smoothed by a fast Fourier transformation, as well as a referencing of time-successively obtained measuring values of in the direction of travel spaced magnetic field sensors arranged one behind the other is made in order to determine the direction and the velocity of the respective vehicle movement as well as the vehicle length for the classification of the respective vehicle, with a plurality of best matching extreme pairs of measuring values being considered over a predetermined time period for the determination of the velocity.

2. The method according to Claim 1,
**characterised in that**
the velocity of the vehicles is calculated from the time difference between the peaks of the measuring values of the magnetic field sensors arranged one behind the other.

3. The method according to Claim 1,
**characterised in that**
for the acquisition and classification of vehicles cruising side by side in multilane fashion, n + 1 sensors are provided for n lanes and their signals are subjected to a cross correlation.

4. The method according to one of the previous claims,
**characterised in that**
the sensor signals are subjected to a passive low-pass filtering for eliminating high-frequency interference signals and a subsequent analog/digital conversion, with the digital data reaching a digital signal processor which starts the data acquisition and data conversion for all sensors simultaneously, and further the preprocessed event-relevant output data of the digital signal processor reach a gateway computer via a serial interface.

5. An arrangement for carrying out the method according to one of Claims 1 to 4,
**characterised in that**
at least one sensor assembly (1) consisting of two fluxgate magnetic field sensors disposed one behind the other in the direction of travel is provided for each lane, or roadway or road area to be monitored, with the at least one sensor assembly being secured adjacent to, above, or below the lane, roadway (3), or road area, further the fluxgate magnetic field sensors being connected with an analog/digital converter via a low pass, whose concatenated output signals reach a digital signal processor for event detection and storage.

6. The arrangement according to Claim 5,
**characterised in that**
sensor assembly is secured at a non-ferromagnetic beam above or at the side of the roadway or lane.

7. The arrangement according to Claim 5,
**characterised in that**
the sensor assembly is arranged in two parallel non-ferromagnetic reserve conduits (5) which are routed below the roadway.

8. The arrangement according to one of Claims 5 to 7,
**characterised in that**
the digital signal processor is connected with a gateway computer for further processing as well as for wired or wireless data communication via an interface.

## Revendications

1. Procédé de détermination de données de circulation à l'aide de détection et de classification de véhicules de tous types qui se déplacent ou qui sont immobiles, utilisant des capteurs de champ magnétique au moins sensibles suivant un axe,
**caractérisé en ce que**,
à l'aide d'une disposition (1) d'au moins deux capteurs de champ magnétique à flux-gate sur une chaussée (3), distants entre eux, une détermination des composantes non influencées du champ magnétique terrestre est réalisée à l'endroit de l'utilisation, puis un calibrage est réalisé;
en outre la verticale ou la normale à la surface terrestre et la modification du champ magnétique terrestre focalisant le flux dans cette direction est déterminée de manière cyclique et les valeurs de mesure obtenues sont lissées par une transformation de Fourier rapide,
ainsi qu'un classement des valeurs de mesure, qui se succèdent dans le temps, de capteurs de champ magnétique, qui se succèdent à intervalles dans la direction de la circulation, est réalisé afin de déterminer la direction et la vitesse du mouvement du véhicule en question ainsi que la longueur du véhicule pour la classification du véhicule, moyennant quoi, pour déterminer la vitesse, une pluralité de paires de valeurs de mesure extrêmes qui s'accordent au mieux sont prises en compte sur une période prédéterminée.

2. Procédé selon la revendication 1, **caractérisé en ce que** la vitesse des véhicules est calculée à partir de la différence de temps entre les valeurs de crête des valeurs de mesure des capteurs de champ magnétique disposés l'un derrière l'autre.

3. Procédé selon la revendication 1, **caractérisé en ce que**, pour la détermination et la classification de véhicules circulant les uns à côté des autres sur plusieurs voies, n+1 capteurs sont prévus pour n voies et leurs signaux sont soumis à une corrélation croisée.

4. Procédé selon l'une des revendications précédentes, **caractérisé en ce que** les signaux des capteurs sont soumis à une filtration passe-bas pour éliminer les signaux parasites à haute fréquence, et ensuite à une conversion analogique/numérique, moyennant quoi les données numériques arrivent sur un processeur de signaux numérique qui démarre en même temps pour tous les capteurs l'acquisition et la conversion des données et les données de sortie, pré-traitées et caractéristiques pour l'événement, du processeur de signaux numérique arrivent sur un ordinateur de communication par l'intermédiaire d'une interface série.

5. Disposition pour la mise en oeuvre du procédé selon l'une des revendications 1 à 4, **caractérisé en ce que**, pour chaque voie de circulation ou chaussée ou surface de circulation à surveiller, au moins un ensemble de capteurs (1), constitué de deux capteurs de champ magnétique disposés l'un derrière l'autre dans la direction de la circulation, est prévu, l'ensemble de capteurs étant fixé à côté, au-dessus ou en dessous de la voie de circulation (3) ou chaussée ou surface de circulation, en outre les capteurs de champ magnétique à flux-gate étant reliés par l'intermédiaire d'un filtre passe-bas avec un convertisseur analogique/numérique dont les signaux de sortie interconnectés arrivent sur un processeurs de signaux numériques pour une détection de l'événement et un enregistrement.

6. Disposition selon la revendication 5, **caractérisée en ce que** l'ensemble de capteurs est fixé à une console non ferromagnétique au-dessus ou latéralement par rapport à la chaussée ou la voie de circulation.

7. Disposition selon la revendication 5, **caractérisée en ce que** l'ensemble de capteurs est disposé dans deux tubes vides (7) non ferromagnétiques parallèles et qui s'étendent au-dessous de la chaussée.

8. Disposition selon l'une des revendications 5 à 7, **caractérisée en ce que** le processeur de signaux numériques est relié, par l'intermédiaire d'une interface, avec un ordinateur de communication pour un traitement ultérieur ainsi que pour une transmission de données avec fils ou sans fils.
